# EUROPÄISCHE PATENTSCHRIFT

(11) **EP 0 682 213 B1**
(45) Veröffentlichungstag und Bekanntmachung des Hinweises auf die Patenterteilung: **03.12.1997**
(21) Anmeldenummer: 95106281.9
(22) Anmeldetag: 26.04.1995
(51) Int. Cl.: F24D 19/10, F24D 3/10

(54) **Kombinationsarmatur zum Anschluss von Sicherheitsventil, Schnellentlüfter und Manometer**
Connection piece for security valve, quick air relief valve and manometer
Pièce de raccordement pour vanne de sécurité, soupape de décharge rapide d'air et manomètre

(30) Priorität: 13.05.1994 DE 9407997 U
(43) Veröffentlichungstag der Anmeldung: 15.11.1995
(73) Patentinhaber: HANS SASSERATH & CO KG, D-41352 Korschenbroich (DE)
(72) Erfinder: Hecking, Willi, D-41238 Mönchengladbach (DE)
(74) Vertreter: Weisse, Jürgen, Dipl.-Phys. Patentanwalt

(56) Entgegenhaltungen:
- CH-A- 248 075
- DE-U- 9 306 372
- FR-A- 2 678 048

## Beschreibung

### Technisches Gebiet

Die Erfindung betrifft eine Kombinationsarmatur zum Anschluß von Sicherheitsventil, Schnellentlüfter und Manometer an ein druckfestes, geschlossenes Heizungssystem.

### Stand der Technik

Zum Beheizen von Gebäuden werden üblicherweise druckfeste, geschlossene Warmwasser-Heizungssysteme verwendet. Dabei läuft das durch einen Heizkessel erwärmte Wasser in einem gegen die Atmosphäre abgeschlossenen Kreislauf um. Eine thermische Expansion des Wassers bei Aufheizung wird von einem Druckausdehnungsgefäß aufgenommen. Solche geschlossenen Warmwasser-Heizungssysteme müssen ein Sicherheitsventil aufweisen. Ein solches Sicherheitsventil spricht auf Überdruck im System an und öffnet und läßt Wasser in einen Sicherheitsventi-Auslaßanschluß abfließen. Dabei wird verlangt, daß zwischen dem Heizkessel und dem Ventilsitz des Sicherheitsventils keine Verengungen oder Absperrmöglichkeiten vorhanden sind. Das soll sicherstellen, daß das Sicherheitsventil das unter Überdruck stehende Wasser stets gefahrlos ableiten kann. Das Sicherheitsventil wird weiterhin immer an der heißesten Stelle des Warmwasser-Heizungssystems in unmittelbarer Nähe des Heizkessels installiert.

In druckfesten, geschlossenen Warmwasser-Heizungssystemen treten durch Entgasung des Wassers Lufteinschlüsse auf. Solche Lufteinschlüsse können die Wärmeabgabe von Heizkörpern des Warmwasser-Heizungssystems erheblich beeinträchtigen. Es sind daher "Schnellentlüfter" bekannt. Solche Schnellentlüfter enthalten einen mit dem Warmwasser-Heizungssystem verbundenen Behälter, in dem sich ein Schwimmer befindet. Durch den Schwimmer ist über einen Hebel ein Entlüftungsventil betätigbar. Der Schwimmer schwimmt auf der Wasseroberfläche. Wenn die Wasseroberfläche und damit der Schwimmer durch die sich ansammelnde Luft sinkt, wird durch das Entlüftungsventil Luft abgeblasen. Die Entgasung des Wassers findet am stärksten am heißesten Punkt des Warmwasser-Heizungssystems statt. Das ist ebenfalls in der Nähe des Kessels oder sonstigen Wärmeerzeugers.

Sicherheitsventil und Schnellentlüfter sind daher üblicherweise nahe beieinander in der Nähe des Heizkessels angeordnet.

Zur Drucküberwachung ist weiterhin ein Manometer vorgesehen.

Das Manometer und der Schnellentlüfter arbeiten ständig. Sie müssen daher gewartet werden. Das bedingt, daß die Verbindung zwischen dem Warmwasser-Heizungssystem und dem Schnellentlüfter bzw. dem Manometer absperrbar sein sollte. Zu Wartungszwecken kann dann die Verbindung abgesperrt und der Schnellentlüfter bzw. das Manometer ausgebaut werden. Zu diesem Zweck sind Absperrventile vorgesehen, die als gesonderte Niederschraubventile ausgebildet sind.

Es ist weiterhin in verschiedener Form bekannt, Sicherheitsventil, Schnellentlüfter und Manometer mittels einer Kombinationsarmatur zu einer Baugruppe zusammenzubauen.

Eine Firmendruckschrift der MTR GmbH, Gemmrigheim: "Kesselsicherheitsgruppe KSG/G" beschreibt eine Kombinationsarmatur bei welcher ein Manometer, ein Schnellentlüfter und ein Sicherheitsventil nebeneinander mit entsprechenden Anschlüssen auf einer langgestreckten Kesselkonsole montiert sind. Die Kesselkonsole ist auf der gegenüberliegenden Seite mittels eines Anschlußstutzens mit dem Heizungssystem verbunden.

Eine ähnliche Anordnung zeigt eine Firmendruckschrift "Technisches Blatt mit Montageanweisung - Kessel Gruppe" der CALEFFI Armaturen GmbH, Mühlheim/Main.

Eine Druckschrift "BRAUKMANN-Abscheider-Kombination DBGM" Nr. AK 123 zeigt eine Kombinationsarmatur zum Anschluß von Sicherheitsventil, Schnellentlüfter und Manometer an ein druckfestes, geschlossenes Heizungssystem. Die Kombinationsarmatur weist einen langgestreckten Armaturen-Grundkörper, mit einem sich längs des Armaturen-Grundkörpers erstreckenden Längskanal auf. Der Armaturen-Grundkörper enthält an einem Ende einen quer zur Längsachse des Armaturen-Grundkörpers sich erstreckenden Anschlußstutzen zum Anschluß an das Heizungssystem. Am anderen Ende ist eine Aufnahme für ein Sicherheitsventil vorgesehen, deren Achse sich ebenfalls quer zur Längsachse des Armaturen-Grundkörpers erstreckt. Fluchtend mit dem Anschlußstutzen ist auf der diesem gegenüberliegenden Seite des Armaturen-Grundkörpers ein sich quer zu dem Längskanal erstreckendes Entlüfter-Gehäuse angeformt, das von dem Schnellentlüfter abgeschlossen ist. Ein Manometeranschluß erstreckt sich senkrecht zu der durch die Längsrichtung des Armaturen-Grundkörpers und die Achse des Anschlußstutzens bestimmten Ebene.

Eine ähnliche Anordnung zeigt die EP-A-0 622 592. (DE-U1-G 93 06 372.5) oder die Firmendruckschrift der Honeywell AG, Mosbach: "Einbau-Anweisung Kessel-Kombiarmatur AK 124".

Die beschriebenen bekannten Kombinationsarmaturen gestatten kein Absperren der Verbindung zu dem Schnellentlüfter und dem Manometer.

### Offenbarung der Erfindung

Der Erfindung liegt die Aufgabe zugrunde, eine vorteilhaft zu fertigende und kompakte Kombinationsarmatur zur Installation von Sicherheitsventil, Schnellentlüfter und Manometer zu schaffen, welche die Wartung und den Austausch von Schnellentlüfter oder Manometer gestattet.

Erfindungsgemäß wird diese Aufgabe dadurch gelöst, daß in die Kombinationsarmatur ein Ventil eingebaut ist, durch welches der Durchgang zu dem Schnellentlüfter und dem Manometer bei freiem Durchgang zu dem Sicherheitsventil wahlweise absperrbar ist.

Auf diese Weise kann einerseits eine Kombinationsarmatur verwendet werden, um Sicherheitsventil, Schnellentlüfter und Manometer einfach und raumsparend zu montieren. Andererseits ist es möglich, die Verbindung zwischen dem Heizungssystem und dem Schnellentlüfter bzw. Manometer abzusperren, ohne gleichzeitig ein Absperrventil zwischen Heizungssystem und Sicherheitsventil vorzusehen. Das Absperrventil ist dabei in die Kombinationsarmatur integriert.

Ausgestaltungen der Erfindung, die sich auf eine besonders vorteilhafte konstruktive Gestaltung der Kombinationsarmatur beziehen, sind Gegenstand der Unteransprüche.

Ein Ausführungsbeispiel der Erfindung ist nachstehend unter Bezugnahme auf die zugehörigen Zeichnungen näher erläutert.
- Fig.1: zeigt einen Vertikalschnitt durch eine Baugruppe von Sicherheitsventil, Schnellentlüfter und Manometer, die über eine Kombinationsarmatur an ein druckfestes, geschlossenes Warmwasser-Heizungssystem anschließbar sind.
- Fig.2: zeigt eine abgebrochen dargestellte Draufsicht von oben in Fig.1, teilweise geschnitten längs der Linie A - A von Fig.1.
- Fig.3: zeigt eine Einzelheit der Kombinationsarmatur gesehen in Richtung des Pfeiles X von Fig.1.

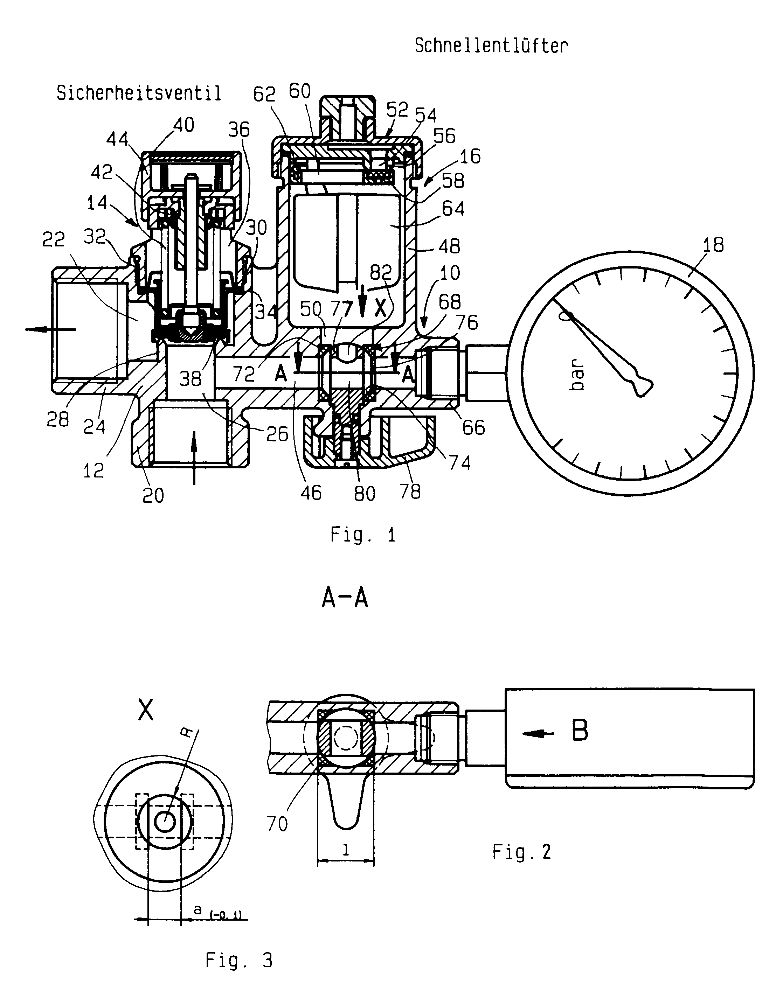

In Fig.1 ist mit 10 generell eine Kombinationsarmatur bezeichnet. Die Kombinationsarmatur weist einen langgestreckten Armaturen-Grundkörper 12 auf. Die Längsrichtung des Armaturen-Grundkörpers 12 verläuft waagerecht in Fig.1. An dem Armaturen-Grundkörper 12 sitzen ein Sicherheitsventil 14, ein Schnellentlüfter 16 und ein Manometer 18. Der Armaturen-Grundkörper 12 weist einen Anschlußstutzen 20 zum Anschluß an ein druckfestes, geschlossenes Warmwasser-Heizungssystem auf. Weiterhin ist an dem Armaturen-Grundkörper 12 ein Sicherheitsventil-Auslaß 22 vorgesehen. Der Sicherheitsventil-Auslaß 22 ist über einen Anschlußstutzen 24 mit einer Auslaßleitung verbindbar.

Der Anschlußstutzen 20 erstreckt sich quer zur Längsrichtung des Armaturen-Grundkörpers 12 nach unten in Fig.1. Der Anschlußstutzen 20 geht unmittelbar in einen mit dem Anschlußstutzen 20 gleichachsigen Sicherheitsventil-Einlaßkanal 26 über. Der Sicherheitsventil-Einlaßkanal 26 erstreckt sich durch einen Ventilsitz 28.

Gleichachsig mit dem Sicherheitsventil-Einlaßkanal 26 ist auf der gegenüberliegenden Seite des Armaturen-Grundkörpers 12 eine Aufnahme 30 für das Sicherheitsventil 14 vorgesehen. Die Aufnahme 30 ist eine mit Innengewinde 32 versehene Bohrung, die eine Anschlagschulter 34 bildet. In die Aufnahme 30 ist eine Sicherheitsventil-Baugruppe 36 eingeschraubt. Die Sicherheitsventil-Baugruppe 36 enthält einen Ventilteller 38. Der Ventilteller 38 ist durch eine vorgespannte Schraubenfeder 40 belastet. Die Schraubenfeder 40 stützt sich an einem Federwiderlager 42 ab. Das Federwiderlager 42 ist mittels eines Stellknopfes 44 verstellbar. Dadurch kann die Vorspannung der Schraubenfeder 40 und damit der Ansprechdruck des Sicherheitsventils 14 verändert werden. Der Vorspannung der Schraubenfeder 40 wirkt der auf die Fläche des Ventiltellers 38 innerhalb des Ventilsitzes 28 wirkende Wasserdruck entgegen. Wenn der Wasserdruck einen durch die Schraubenfeder 40 vorgegebenen Wert überschreitet, hebt der Ventilteller 38 ab und bläst Wasser über den Sicherheitsventil-Auslaß 22 und den Anschlußstutzen 24 ab.

Von dem Sicherheitsventil-Einlaßkanal 26 geht ein Längskanal 46 ab. Der Längskanal 46 verläuft in Längsrichtung des langgestreckten Armaturen-Grundkörpers 12, also waagerecht in Fig.1.

Der Armaturen-Grundkörper 12 bildet ein angeformtes, zylindrisches Entlüfter-Gehäuse 48. Die Achse des Entlüfter-Gehäuses 48 verläuft quer zur Längsrichtung des Armaturen-Grundkörpers 12 parallel zur Achse des Sicherheitsventils 14. Das Entlüfter-Gehäuse 48 ist topfförmig und an dem dem Längskanal 46 abgewandten Ende offen. Das Innere des Entlüfter-Gehäuses 48 ist mit dem Längskanal 46 über eine Bohrung 50 verbunden. Das Entlüfter-Gehäuse 48 ist an seinem offenen Ende durch eine Kappe 52 abgedeckt. Die Kappe 52 enthält einen Auslaßkanal 54, der innen von einem Ventilsitz 56 umgeben ist. Der Ventilsitz 56 wirkt mit einem Ventilschließglied 58 zusammen. Das Ventilschließglied 58 sitzt an einem Hebel 60. Der Hebel 60 ist um eine Schwenkachse 62 verschwenkbar. In dem Entlüfter-Gehäuse 48 sitzt ein Schwimmer 64. In dem Entlüfter-Gehäuse 48 sammelt sich Luft. Dadurch wird in dem Entlüfter-Gehäuse 48 eine Wasseroberfläche gegen Luft gebildet. Auf dieser Wasseroberfläche schwimmt der Schwimmer 64. Wenn die Wasseroberfläche durch stärkere Luftansammlung sinkt, sinkt auch der Schwimmer 64 nach unten in Fig.1. Der Schwimmer nimmt den Hebel 60 mit und bewirkt dadurch ein Abheben des Ventilschließgliedes 58 von dem Ventilsitz 56. Dadurch strömt Luft aus, was wieder zu einem Ansteigen des Wasserspiegels im Entlüftergehäuse führt.

Das Ende des Längskanals 46 bildet einen Anschluß 66 für das Manometer 18.

In der Bohrung 50 sitzt ein Kugelventil 68. Das Kugelventil 68 enthält Lagerkörper 70 mit einander zugewandten, ringförmigen, konkav-sphärischen Lagerflächen 72 und 74. Ein mit dem Längskanal fluchtender Durchgang 76 erstreckt sich durch die Lagerflächen 72 und 74. In den Lagerflächen 72 und 74 ist ein Ventilküken 77 in Form einer Ventilkugel drehbar gelagert. Das Ventilküken 77 ist mittels eines Stellgriffes 78 um eine zur Längsrichtung des Armaturen-Grundkörpers 12 senkrechte, in Fig.1 vertikale Drehachse drehbar. Die Drehachse ist gleichachsig mit der Achse der Bohrung 50. Das Ventilküken 77 weist einen Ventildurchgang 80 auf. Die Achse des Ventildurchgangs ist senkrecht zu der Drehachse des Ventilkükens 77. In der in Fig.1 dargestellten Schaltstellung des Ventilkükens 77 fluchtet der Ventildurchgang 80 mit dem Längskanal 46. Der Ventildurchgang 80 ist durch eine gleichachsig zu der Bohrung 50 und der Drehachse verlaufende Querbohrung 82 mit der Bohrung 50 verbunden. In der in Fig.2 dargestellten zweiten Schaltstellung des Ventilkükens 77, bei der das Ventilküken 76 um 90° verdreht ist, ist der Durchgang von dem einlaßseitigen Abschnitt des Längskanals 46 sowohl zu dem Manometer 18 als auch zu dem Schnellentlüfter 16 abgesperrt. Die erste Stellung ist die Betriebsstellung. Wasser und Luft können von dem Sicherheitsventil-Einlaßkanal 26 über den Längskanal 46 und den Durchgang 80 sowie die Querbohrung 82 zu dem Schnellentlüfter 16 gelangen. Ebenso steht das Manometer 18 über den Längskanal 46 und den Durchgang 80 mit dem Warmwasser-Heizungssystem in Verbindung. In der zweiten, gegenüber der ersten um 90° verdrehten Stellung des Ventilkükens 77 ist die Verbindung zwischen dem Längskanal 46 und dem Ventildurchgang 80 unterbrochen und damit natürlich auch die Verbindung zu der Querbohrung 82.

Die beschriebene Konstruktion gestattet eine mechanische, spanabhebende Bearbeitung des Werkstücks zur Herstellung des Armaturen-Grundkörpers 12. Das macht es möglich, diesen Armaturen-Grundkörper 12 aus Preßmessing herzustellen.

## Patentansprüche

1. Kombinationsarmatur zum Anschluß von Sicherheitsventil (14), Schnellentlüfter (16) und Manometer (18) an ein druckfestes, geschlossenes Heizungssystem, **dadurch gekennzeichnet, daß** in die Kombinationsarmatur ein Ventil eingebaut ist, durch welches der Durchgang zu dem Schnellentlüfter und dem Manometer bei freiem Durchgang zu dem Sicherheitsventil wahlweise absperrbar ist.

2. Kombinationsarmatur nach Anspruch 1, **dadurch gekennzeichnet, daß**
(a) ein langgestreckter Armaturen-Grundkörper (12), mit einem sich längs des Armaturen-Grundkörpers erstreckenden Längskanal (46) vorgesehen ist, enthaltend
- einen quer zur Längsachse des Armaturen-Grundkörpers (12) sich erstreckenden Anschlußstutzen (20) zum Anschluß an das Heizungssystem an einem Ende,
- eine Aufnahme (30) für ein Sicherheitsventil (14), deren Achse sich ebenfalls quer zur Längsachse des Armaturen-Grundkörpers (12) erstreckt,
- ein sich quer zu dem Längskanal (46) erstreckendes Entlüfter-Gehäuse (48), das von dem Schnellentlüfter abgeschlossen ist und
- einen Manometeranschluß (66)
(b) der Anschlußstutzen (20) zum Anschluß des Heizungssystems unmittelbar in einen dazu gleichachsigen, innerhalb eines Ventilsitzes (28) des Sicherheitsventils (14) mündenden Sicherheitsventil-Einlaßkanal (26) übergeht,
(c) die Aufnahme (30) für das Sicherheitsventil (14) mit dem Anschlußstutzen (20) fluchtend auf der dem Anschlußstutzen (20) gegenüberliegenden Seite des Armaturen-Grundkörpers (12) vorgesehen ist und eine Sicherheitsventil-Baugruppe (36) mit einem Ventilteller (38) aufnimmt, der mit dem Ventilsitz (28) zusammenwirkt,
(d) der Längskanal (46) einlaßseitig mit dem Sicherheitsventil-Einlaßkanal (26) in Verbindung steht,
(e) der Längskanal (46) im Bereich des anderen Endes des Armaturen-Grundkörpers (12) mit dem Entlüfter-Gehäuse (48) und dem Manometeranschluß (66) verbunden ist und
(f) in dem Längskanal (46) ein Ventil (68) angeordnet ist, durch welches wahlweise entweder gleichzeitig eine Verbindung zwischen einem mit dem Sicherheitsventil-Einlaßkanal (26) in Verbindung stehenden einlaßseitigen Abschnitt des Längskanals (46) und sowohl dem Entlüfter-Gehäuse (48) als auch dem Manometeranschluß (66) herstellbar ist oder die Verbindung zwischen dem einlaßseitigen Abschnitt des Längskanals (46) und dem Entlüfter-Gehäuse (48) sowie dem Manometeranschluß (66) absperrbar ist.

3. Kombinationsarmatur nach Anspruch 2, **dadurch gekennzeichnet,** daß das Ventil (68) ein Ventilküken (77) aufweist, das um eine quer zur Längsachse des Armaturen-Grundkörpers (12) verlaufende Drehachse drehbar ist und einen senkrecht zu dieser Drehachse verlaufenden Ventildurchgang (80) sowie eine längs der Drehachse verlaufende, mit dem Ventildurchgang (80) in Verbindung stehende Querbohrung (82) aufweist, wobei in einer ersten Schaltstellung des Ventils (68) der Ventildurchgang (80) gegen den einlaßseitigen Abschnitt des Längskanals (46) abgesperrt ist und in einer zweiten Schaltstellung des Ventils (68) der Ventildurchgang (80) mit dem einlaßseitigen Abschnitt des Längskanals (46) in Verbindung steht.

4. Kombinationsarmatur nach Anspruch 3, **dadurch gekennzeichnet, daß** das Ventil ein Kugelventil ist, das in eine das Entlüfter-Gehäuse (48) mit dem Längskanal (46) verbindenden Bohrung (50) eingesetzt ist und dessen Ventilküken (77) mit einem Stellgriff (78) auf der dem Entlüfter-Gehäuse (48) abgewandten Seite des Armaturen-Grundkörpers (12) verbunden ist.

5. Kombinationsarmatur nach Anspruch 4, **dadurch gekennzeichnet, daß** der Manometeranschluß (66) das Ende des Längskanals (66) bildet.

6. Kombinationsarmatur nach Anspruch 5, **dadurch gekennzeichnet, daß** von der Aufnahme (30) für das Sicherheitsventil (14) stromab von dem Ventilsitz (28) ein Sicherheitsventil-Auslaß (22) abgeht, der in einem Anschlußstutzen (24) endet, wobei die Achse des Anschlußstutzens parallel zur Längsrichtung des Armaturen-Grundkörpers (12) verläuft.

7. Kombinationsarmatur nach einem der Ansprüche 1 bis 6, **dadurch gekennzeichnet,** daß der Armaturen-Grundkörper (12) aus mechanisch bearbeitetem Preßmessing besteht.

## Claims

1. Combination fitting for connecting safety valve (14), quick-action deaerator (16) and manometer (18) to a compression-proof closed heating system, **characterized in that** a valve is mounted in the combination fitting, which valve is arranged to selectively lock the passage to the quick-action deaerator and the manometer with free passage to the safety valve.

2. Combination fitting as set forth in claim 1, **characterized in that**
(a) a longitudinal fitting basic body (12) is provided, having a longitudinal passage (46) extending longitudinally to the fitting basic body and comprising
- a connecting branch (20) extending laterally to the longitudinal axis of the fitting basic body (12) for connection to the heating system at one end,
- a receiver (30) for a safety valve (14), the axis of which is also extending transversally to the longitudinal axis of the fitting basic body (12),
- a deaerator housing (48) extending transversally to the longtiudinal passage (46) and closed by the quick-action deaerator, and
- a manometer raccord (66),
(b) the connecting branch (20) for connection of the heating system directly passes into a safety valve inlet passage (26) biaxial thereto, ending within a valve seat (28) of the safety valve (14),
(c) the receiver (30) for the safety valve (14) is provided in alignment with the connecting branch (20) on the side of the fitting basic body (12) remote from the connecting branch (20), and accomodates a safety valve assembly (36) having a valve disk (38) cooperating with the valve seat (28),
(d) the longitudinal passage (46) is connected on the inlet side to the savety valve inlet passage (26),
(e) the longitudinal passage (46) is connected in the range of the other end of the fitting basic body (12) to the deaerator housing (48) and the manometer raccord (66), and
(f) a valve (68) is arranged in the longitudinal passagc (46), which valve is arranged to selectively either build up simultanously a connection between an inlet-side section of the longitudional passage (46) communicating with the safety valve inlet passage (26) and the deaerator housing (48) as well as the the manometer raccord (66) or to lock the the connection between the inlet-side section of the longitudinal passage (46) and the deaerator housing (48) as well as the manometer raccord (66).

3. Combination fitting as set forth in claim 2, **characterized in that** the valve (68) has a valve tap (77) arranged to be rotated about a rotary axis extending transversally to the longitudinal axis of the fitting basic body (12), and a valve passage (80) extending vertically to this rotary axis, as well as a traversal bore (82) extending longitudinally to the rotary axis and communicating with the valve passage (80), in which in a first switching position of the valve (68) the valve passage (80) is locked against the inlet-side section of the longitudinal passage (46), and in a second switching position of the valve (68) the valve passage communicates with the inlet-side section of the longitudinal passage (46).

4. Combination fitting as set forth in claim 3, **characterized in that** the valve is a spherical valve introduced into a bore (50) connecting the deaerator housing (48) to the longitudinal passage (46), and the valve tap (77) of which is connected to an adjusting handle (78) on the side of the fitting basic body (12) remote from the deaerator housing (48).

5. Combination fitting as set forth in claim 4, **characterized in that** the manometer raccord (66) forms the end of the longitudinal passage (66).

6. Combination fitting as set forth in claim 5, **characterized in that** a safety valve outlet (22) is branching of the receiver (30) for the safety valve (14) downstreams of the valve seat (28), which outlet ends in a connecting branch (24), the axis of the connecting branch extending parallel to the longitudinal direction of the fitting basic body (12).

7. Combination fitting as set forth in one of claims 1 to 6, **characterized in that** the fitting basic body (12) is made of mechanically treated hot-pressed brass.

## Revendications

1. Pièce à têtes multiples destinée à raccorder une soupape de sécurité (14), un purgeur automatique (16) et un manomètre (18) à un système de chauffage à circuit fermé résistant à la pression, **caractérisée par le fait qu**'une soupape est montée dans la pièce à têtes multiples, soupape par laquelle le passage menant au purgeur automatique et au manomètre est susceptible d'être bloqué au choix lorsque le passage vers la soupape de sécurité est libre.

2. Pièce à têtes multiples selon la revendication 1, **caractérisée par le fait que**
(a) un corps de base de pièce (12) allongé muni d'un canal longitudinal (46) s'étirant le long du corps de base de pièce est prévu, corps comprenant
- un talon de raccordement (20) s'étirant transversalement par rapport à l'axe longitudinal du corps de base de pièce (12) et destiné à une extrémité au raccordement au système de chauffage,
- un réceptacle (30) pour une soupape de sécurité (14) dont l'axe s'étire également transversalement par rapport à l'axe longitudinal du corps de base de pièce (12),
- un boîtier de purgeur (48) fermé par le purgeur automatique et s'étirant transversalement par rapport au canal longitudinal (46) et
- un raccord de manomètre (66)
(b) le talon de raccordement (20) destiné à raccorder le système de chauffage passe directement dans un canal d'entrée de soupape de sécurité (26) équiaxial à celui-ci débouchant à l'intérieur d'un siège de soupape (28) de la soupape de sécurité (14),
(c) le réceptacle (30) pour la soupape de sécurité (14) est prévu, en s'alignant sur le talon de raccordement (20), sur la face du corps de base de pièce (12) opposée au talon de raccordement (20) et réceptionne un bloc de soupape de sécurité (36) muni d'une tête de soupape (38) concourant avec le siège de soupape (28),
(d) le canal longitudinal (46) est relié du côté de l'entrée au canal d'entrée de soupape de sécurité (26),
(e) le canal longitudinal (46) est relié dans le domaine de l'autre extrémité du corps de base de pièce (12) au boîtier de purgeur (48) et au raccord de manomètre (66) et
(f) une soupape (68) est disposée dans le canal longitudinal (46), soupape par laquelle au choix soit une liaison est susceptible d'être établie en même temps entre une section du canal longitudinal (46) située du côté de l'entrée et reliée au canal d'entrée de la soupape de sécurité (26) et entre aussi bien le boîtier de purgeur (48) que le raccord de manomètre (66), soit la liaison entre la section du canal longitudinal (46) située du côté de l'entrée et entre le boîtier de purgeur (48) ainsi que le raccord de manomètre (66) est susceptible d'être bloquée.

3. Pièce à têtes multiples selon la revendication 2, **caractérisée par le fait que** la soupape (68) présente un boisseau de soupape (77) qui est susceptible de tourner autour d'un axe de rotation s'étendant transversalement par rapport à l'axe longitudinal du corps de base de pièce (12) et un passage de soupape (80) s'étendant perpendiculairement à cet axe de rotation ainsi qu'un perçage transversal (82) relié au passage de soupape (80) et s'étendant le long de l'axe de rotation, le passage de soupape (80) étant bloqué, dans une première position d'enclenchement de la soupape (68), contre la section du canal longitudinal (46) située du côté de l'entrée et le passage de soupape (80) étant relié à la section du canal longitudinal (46) située du côté de l'entrée dans une seconde position d'enclenchement de la soupape (68).

4. Pièce à têtes multiples selon la revendication 3, **caractérisée par le fait que** la soupape est une soupape à sphère qui est insérée dans un percage (50) reliant le boîtier de purgeur (48) au canal longitudinal (46) et dont le boisseau de soupape (77) est relié à une manette (78) sur la face du corps de base de pièce (12) détournée du boîtier de purgeur (48).

5. Pièce à têtes multiples selon la revendication 4, **caractérisée par le fait que** le raccord de manomètre (66) forme l'extrémité du canal longitudinal (66).

6. Pièce à têtes multiples selon la revendication 5, **caractérisée par le fait qu**'une sortie de soupape de sécurité (22) part du réceptacle (30) pour la soupape de sécurité (14) en aval du siège de soupape (28), sortie qui se termine dans un talon de raccordement (24), l'axe du talon de raccordement s'étendant parallèlement au sens longitudinal du corps de base de pièce (12).

7. Pièce à têtes multiples selon l'une des revendications 1 à 6, **caractérisée par le fait que** le corps de base de pièce (12) se compose de laiton pour travail à chaud faconné mécaniquement.
